Europäisches Patentamt

European Patent Office

Office européen des brevets

(19)

(11) Veröffentlichungsnummer: **0 087 669**
**B1**

(12) **EUROPÄISCHE PATENTSCHRIFT**

(45) Veröffentlichungstag der Patentschrift:
04.12.85

(51) Int. Cl.⁴: **A 23 L 1/08**, A 23 L 1/30,
A 61 K 47/00

(21) Anmeldenummer: 83101411.3

(22) Anmeldetag: 14.02.83

(54) Verfahren zur Herstellung eines biologisch hochwertigen, naturbelassenen Nahrungskonzentrats, das bei dem Verfahren erhaltene Produkt und seine Verwendung.

(30) Priorität: 02.03.82 DE 3207505

(43) Veröffentlichungstag der Anmeldung:
07.09.83 Patentblatt 83/36

(45) Bekanntmachung des Hinweises auf die Patenterteilung:
04.12.85 Patentblatt 85/49

(84) Benannte Vertragsstaaten:
AT CH DE FR GB IT LI

(56) Entgegenhaltungen:
EP - A - 0 055 381
DE - A - 2 919 059
FR - A - 2 463 587
US - A - 2 705 433
US - A - 3 351 472
US - A - 3 366 494
US - A - 3 780 185
US - A - 4 220 666

Römpps Chemie-Lexikon (1976), Seite 1507
Chem.Abstracts, Bd.38, Nr.7,10.Apr.1944,Spalte 1770/7,
Columbus, Ohio (US).

(73) Patentinhaber: Schanze, Rudolf, c/o Hotel Fruth
Landsberger Strasse 9, D-8034 Germering (DE)

(72) Erfinder: Schanze, Rudolf, c/o Hotel Fruth Landsberger
Strasse 9, D-8034 Germering (DE)

(74) Vertreter: Kraus, Walter, Dr. et al, Patentanwälte Kraus
Welsert & Partner Thomas-Wimmer-Ring 15,
D-8000 München 22 (DE)

BUNDESDRUCKEREI BERLIN

## Beschreibung

Die Erfindung betrifft ein Verfahren zur Herstellung eines biologisch hochwertigen, naturbelassenen Nahrungskonzentrats, das bei dem Verfahren erhaltene Produkt und seine Verwendung.

In der menschlichen Ernährung der Industriestaaten mit Überschußversorgung an Lebensmitteln zeichnet sich eine außerordentliche Trendwende ab. Derzeit ist die allgemeine Ernährung gekennzeichnet durch einen Überkonsum an Eiweiß und Energie. Die Nahrungsmittel werden auf solche Weise aufbereitet, daß sie an natürlichen Begleitstoffen verarmt sind. Die Getreideprodukte sind auf ihre Kohlenhydratanteile, die Eiweißprodukte auf die Muskelfleischanteile bei tierischem Eiweiß oder auf die Eiweißanteile beim pflanzlichen Eiweißträgern reduziert. Die bei der Aufbereitung der Lebensmittel anfallenden Nebenprodukte werden verworfen, obwohl sie die Ballastanteile, Mineral- und Spurenstoffe, oft auch viele Vitamine enthalten, die für eine ausgeglichene Bedarfsdeckung beim Menschen dringend erforderlich sind.

Als Folge dieser weitverbreiteten Überversorgung entstehen im menschlichen Körper Stoffwechselschlacken, die mangels Mineral- und Spurenstoffen nicht als lösliche Salze ausgeschieden werden können. Sie werden vom Körper hilfsweise in Nebenprodukte verwandelt und verbleiben in unterschiedlichen Organen. Der Mangel an Ballaststoffen innerhalb der Nahrung führt ebenfalls zu Störungen in der Verdauung und im gesamten Körper. Die Beziehungen zwischen dieser Form einer nicht mehr naturgemäßen und über den Bedarf getriebenen Ernährung und modernen Zivilisationskrankheiten werden immer offensichtlicher in den Fachkreisen erkannt und diskutiert.

Zur Beseitigung von Stoffwechselüberschüssen als ausscheidungsfähige, insbesondere harnpflichtige Substanzen muß immer eine ausreichende Mineralversorgung zur Bildung löslicher Salze gewährleistet sein. Die hormonelle und enzymatische Steuerung solcher Abbauvorgänge wird weiterhin durch bestimmte Eiweißbausteine, insbesondere essentielle Aminosäuren und nützliche Mikroelemente (Spurenelemente), reguliert. Das Eiweiß bietet die Grundlage des Enzymkörpers, das Spurenelement die Aktivierungsgrundlage des Enzyms. Nur beide Stoffgruppen in der Nahrung gewährleisten die Funktionsfähigkeit der richtigen Antwort des Körpers auf Überschüsse und die damit verbundenen Belastungen.

Berichte über die Zunahme koronärer und ischämischer Herzerkrankungen, Rheumasyndrome, Augenstörungen in Form von Glaukom und Katarakt sind immer auch Anzeichen dafür, daß die Grundversorgung mit Nahrung unter kritischen Imballanzen leidet. Im Vordergrund steht dabei als Störungsfeld und Ursache der Mangel an Ballast, Mineralien, Vitaminen, Spurenstoffen und teilweise an essentiellen Amino- und Fettsäuren.

Bei anderen Gelegenheiten, beispielsweise bei Hochleistungssportlern, Kranken oder bei physischen oder psychischen Anstrengungen, ist oft die Versorgung mit Kohlenhydraten nicht gewährleistet. Hochleistungssportler oder besonders unter Stress stehende Personen nehmen beispielsweise zur Energieauffrischung Traubenzucker zu sich. Der Körper braucht aber bei der Versorgung mit Kohlenhydraten zum Umsetzen von Kohlenhydraten essentielle Amino- und Fettsäuren, Elektrolyten etc. Durch Traubenzucker wird zwar Energie zugeführt, aber es bahnt sich gleichzeitig ein Verlust und eine Unterversorgung an anderen wesentlichen Nahrungsbestandteilen an.

Auf der anderen Seite hat die moderne Lebensmitteltechnologie Verfahren und Methoden entwickelt, welche den Zugriff auf besonders hochwertige Substanzen ermöglichen und durch die Bausteine zur Verfügung gestellt werden, auf deren Grundlage es möglich wäre, den auftretenden Zivilisationsschäden vorbeugend entgegenzutreten und momentane Bedürfnisse, wie bei Hochleistungssport etc., abzudecken.

Die wissenschaftliche Durchdringung der menschlichen Physiologie, medizinischer und ernährungsbedingter Zusammenhänge, hat einen tieferen Einblick ermöglicht in Zusammenhänge, wie sie sich ebenfalls als Zivilisationserscheinung im Alltag, im Sport, bei Krankheit, im Alter und in der Jugend darstellen. Es gibt zahlreiche Stoffe, die für die menschliche Ernährung besonders gut geeignet sind.

Milcheiweiß stellt im wesentlichen eine Mischung aus mycellösem Kasein und sphärischem Serumeiweiß dar. In 100% Milch-Gesamt-Eiweiß sind überschlägig 80% Kaseine, 15% Albumin-Fraktionen, 4% Globulin-Fraktionen und 1% Nicht-Protein-Stickstoff enthalten. Die Kaseine sind beim Vorgang der Gerinnung, der Käserei, abtrennbar, so daß — je nach technischem Prozeß — Molken- oder Serumeiweiß verbleibt. Mit Hilfe der Ultrafiltration oder Membrantrennung kann das Serumeiweiß vom Nicht-Protein-Stickstoff getrennt werden. Es wird ein Retentat erhalten, welches das hochwertigste bisher bekannte Eiweiß enthält. Seine biologische Wertigkeit liegt bei 138, verglichen mit Hühnereier-Eiweiß (100) und verglichen mit Kasein, dessen biologische Wertigkeit zwischen 70–80 liegt. (Zur biologischen Wertigkeit vgl. die Literaturstelle »Milch und Milchprodukte in der Ernährung«, E. Renner (Universität Gießen), 1975, 1. Auflage, Volksw. Verlag GmbH, Kempten und Verlag Th. Mann, Hildesheim.) Als biologische Wertigkeit (=BW) versteht man die Gramm Körpereiweiß, die beim erwachsenen Menschen durch 100 g des Nahrungsproteins ersetzt werden können, wobei die BW von Volleiprotein als Vergleichsmaß = 100 gesetzt wird.

Wie aus der folgenden der genannten Literaturstelle entnommenen Tabelle ersichtlich ist, liegt das Milcheiweiß mit einer BW von rund 92 nur geringfügig unter derjenigen des Eierproteins. Zwischen Kasein und Lactalbumin besteht ein deutlicher Unterschied, wobei das Lactalbumin in seiner Wertigkeit sogar noch höher eingeschätzt wird als das Volleiprotein, da zur Deckung des Tagesbedarfs an essentiellen Aminosäuren 17,4 g Eiprotein erforderlich sind, aber nur 14,5 g Milchalbumin. An Kuhmilchprotein sind insgesamt 28,4 g notwendig. Das Lactalbumin trägt damit wesentlich zur hohen BW des Milcheiweißes bei.

Tabelle

| Nahrungsprotein | BW |
| --- | --- |
| Vollei | 100 |
| Kuhmilch | 92 |
| Kasein | 73 |
| Lactalbumin | 104 |
| Rindfleisch | 78 |
| Kartoffel | 69 |
| Erdnuß | 60 |
| Weizenmehl | 45 |

Im menschlichen Körper kann hochwertiges Eiweiß praktisch verlustlos verwertet werden und ist daher besonders geeignet, Eiweißmangelzuständen und -schäden vorzubeugen. Allerdings ist derartiges Eiweiß hochempfindlich, besonders gegen Temperatureinwirkung. Beim praktischen Gebrauch darf es seine hohe natürliche Wertigkeit nicht verlieren.

Honig stellt im wesentlichen eine Mischung aus Kohlenhydraten, insbesondere Monosacchariden, dar. Jedoch ist Honig mehr als die Summe seiner Zucker, da er durch den lebendigen Verarbeitungs- und Fermentationsprozeß über die Biene mit einer Palette hochwirksamer, biologisch wertvoller Vitalstoffe angereichert ist, die ihn für den Menschen besonders wertvoll und hilfreich machen. Hierüber besteht eine umfangreiche triviale und wissenschaftliche Literatur, die als bekannt vorausgesetzt wird. Allerdings ist auch Honig hochempfindlich und muß sehr schonend behandelt werden, soll er seine hohe natürliche Wertigkeit nicht verlieren. Es bestehen daher bezüglich Honig eine Reihe gesetzlicher Vorschriften, die gewährleisten, daß seine natürliche Qualität unverändert zum Verbraucher gelangt. Innerhalb dieser nimmt der Anteil von Wasser im Honig eine wichtige Stellung ein, da bekannt ist, daß Honig bereits ab über 17% Wasser vergärungsfähig und verderblich ist, falls Temperatur, Lagerung über Zeit und Kontamination mit entsprechenden Gärhefen die Voraussetzungen schaffen. Der deutsche Imkerbund setzt daher für Honig (ausgenommen Heidehonig) einen Maximalgehalt an Wasser von 21% fest. Innerhalb dieser Konzentration, die damit mindestens 79% Trockenmasse im Honig entspricht, reicht die natürliche Konservierungskraft über Jahre hinaus aus, Honig stabil und vital zu halten (vgl. zur Literatur über Honig u. a. »The Beekeeper's handbook« Owen Meyer, 1981, Thorson's publishers Ltd., Wellington, Nothamptonshite, Großbritannien, »The Hive and the Honey Bee« Roy A. Grout, 1963, 5. revidierte Auflage, Dadant & Sons, Hamilton, Illinois, USA, Handbuch der Bienenkunde Band 6, »Der Honig«, E. Zander, A. Koch, Anna Maurizio, 1975, Verlag Eugen Ulmer, Stuttgart).

Pflanzliche Fette, insbesondere Pflanzenöl, sind für die menschliche Ernährung sehr wertvoll. So ist z. B. Sonnenblumenöl eines der für die menschliche Ernährung wertvollsten Öle, neben frischem Leinöl und Distelöl. Leinöl besitzt jedoch den Nachteil, daß es kaum haltbar ist, und Distel- und Saffloröl können nicht immer sicher beschafft werden. Der Wert liegt in dem außerordentlich hohen Gehalt lebenswichtiger Fettsäuren, die einerseits verhindern können, daß sich durch überlasteten Stoffwechsel Fettverbindungen, z. B. Cholesterin, in den Gefäßen ablagern, oder aber durch Fettüberschuß entstandene Körperschäden auf natürlichem Wege abzubauen helfen. Es ist hervorragend geeignet, fettlösliche Vitamine, wie die Vitamine A − D − E − K, aufzunehmen und dem Körper verfügbar zu halten und in Verbindung mit natürlichem Lecithin aus Pflanzenfetten sehr feine Emulsionen zu bilden. Vergesellschaftet mit entsprechendem Eiweiß und Kohlenhydraten bietet es eine Grundlage der Wahl für eine biologisch hochwertige Ernährung. Auch Sonnenblumenöl bedarf schonender Behandlung.

Man hat schon verschiedentlich versucht, die oben genannten Nahrungsmittel zu variieren, um sie in stabilere Formen zu überführen oder sie miteinander zu kombinieren.

In der DE-OS 1 692 782 wird ein Verfahren zur Herstellung eines Honig-Milch-Trockenerzeugnisses beschrieben, bei dem ein Gemisch aus Honig, einem Trockenmilcherzeugnis und Wasser, vermischt und die Mischung getrocknet wird. Anstelle des Trockenmilcherzeugnisses und Wasser kann man auch

3

frische Milchprodukte, beispielsweise Vollmilch, Magermilch, Buttermilch, Molke, verwenden. Bei diesem bekannten Verfahren erhält man ein Produkt, welches pulverförmig ist und 10 bis 75 Teile Honigfeststoffe auf etwa 90 bis 25 Teile Milchfeststoffe enthält. Es ist bei diesem Verfahren wesentlich, daß der Wassergehalt vor dem Trocknen bei über 90% liegt. Gemäß den meisten Beispielen erfolgt die Trocknung durch Gefriertrocknung. Es wird jedoch angegeben, daß man auch andere Trocknungsverfahren verwenden kann. Es ist ein Nachteil dieses Verfahrens, daß zur Überführung des Honigs in ein pulverförmiges Produkt große Energiemengen erforderlich sind, da Lösungen mit einem Wassergehalt von über 90% eingedampft und getrocknet werden müssen. Dieses Verfahren ist daher technisch nachteilig. Die Gefriertrocknung ist weiterhin apparateaufwendig, und daher ist dieses Verfahren für die technische Großherstellung von gepulverten Honigprodukten ungeeignet.

In der DE-AS 1 003 560 wird ein Verfahren zur Herstellung von Honigprodukten beschrieben, bei dem eine Lösung von gelatinierter Stärke mit Honig vermischt, die Mischung bis etwa 45°C zum Abbau der Stärke stehengelassen wird und nach der Zugabe von Zitronensäure abgekühlt und im Vakuum konzentriert wird. Gemäß einer speziellen Ausführungsform gibt man zu dem Produkt aus Honig und Stärke Milch oder Milchtrockenpulver. Das bei diesem Verfahren erhaltene Produkt besitzt den Nachteil, daß seine Lagerungsfähigkeit begrenzt ist.

In der DE-OS 2 919 059 wird ein Verfahren zur Herstellung von pulverförmigen Honigprodukten beschrieben, bei dem Honig mit Buttermilchpulver vermischt wird.

In der DE-OS 2 919 059 wird beschrieben, daß selbst bei geringen Produktmengen für die Einarbeitung des Honigs in geringen Mengen 10 bis 30 min gemischt werden muß. Daraufhin erfolgt eine Ablagerung, die mindestens 10 min beträgt (Beispiel 5), aber in der Regel zwischen 24 bis 48 Stunden (Beispiel 1 u. a.) liegt. Nach der Zwischenlagerung erfolgt der endgültige Zerkleinerungsprozeß, der wiederum 15 bis 20 min dauert. Erst dann sind die Produkte herstellungsmäßig fertig. Es liegen insgesamt Mischzeiten von 25 bis 50 min und Lagerungszeiten von üblicherweise 1 bis 2 Tagen vor. Dies schließt eine industrielle Herstellung so gut wie aus, wenn man darunter versteht, daß industrielle Arbeitsgänge hygienisch ohne Risiken und außerdem vom Raum-, Zeit- und Geräteaufwand her sehr wirtschaftlich arbeiten sollten.

In der US-PS 3 780 185 wird ein nicht-klebriges Honig enthaltendes Produkt beschrieben, das hergestellt wird, indem man ein Sojabohnenprotein-Isolat mit Trockenmilch, Zucker und getrocknetem Honig vermischt und trocknet. Das Produkt liegt in granularer Form vor und kann zu Tabletten oder Riegeln verarbeitet werden. In der US-PS 3 351 472 wird ein Verfahren zur Herstellung von einem streichbaren Honigbuttergemisch beschrieben. Dieses Produkt besteht aus 50 bis 60% Feststoffen aus dem Honig, 2 bis 20% Feststoffen aus der Milch einschließlich 1 bis 10% Fett, ausgewählt unter Milchfett, Tierfett und Pflanzenfett, 5 bis 15% zugegebener Dextrose und 5 bis 15% Mais-Sirupfeststoffen, wobei der Gesamtfeststoffgehalt 68 bis 82% beträgt und das Produkt als Honigbutter verwendet wird. Es ist streichfähig. Dieses Produkt besitzt den Nachteil, daß das Verhältnis von Eiweiß : Fett : Kohlenhydrate nicht innerhalb der gewünschten Grenzen liegt, und außerdem ist es nicht längere Zeit haltbar.

In der US-PS 3 950 551 wird ein Verfahren zur Herstellung eines Nahrungsmittelproduktes beschrieben, welches aus getrockneten oder gemahlenen Flocken besteht und das durch Dünnfilmtrocknen mit zuckerhaltigem entwässerten Sirup und gelatinisierter Stärke und Sojaprotein erhalten wird. Als zuckerhaltigen Sirup kann man auch Honig einsetzen. Das Produkt kann ebenfalls Pflanzenfett enthalten, wobei etwa 3 Gew.-% pflanzliche Öle die gewünschte Textur ergeben.

In der US-PS 2 693 420 wird ein Verfahren zur Herstellung eines trockenen Honigproduktes beschrieben, welches Honig und gelatinisierte Stärke enthält und welches mindestens etwa 45 Gew.-% Honigfeststoffe enthält. Gemäß Anspruch 7 kann das Produkt bis etwa 65 Gew.-% Honigfeststoffe enthalten.

Bei dem Verfahren erhält man ein Produkt in Form eines Kuchens oder eines Klumpens, und die Klumpen müssen dann zerkleinert, pulverisiert und zermahlen werden.

In der US-PS 3 366 494 wird in den Beispielen 3 und 4 ein Honig enthaltendes Produkt beschrieben. Dieses Produkt enthält außer Honig noch ein Pflanzenöl und als Träger mikrokristalline Cellulose. Das Produkt kann als Aerosol eingesetzt werden.

Ein Honig und Milch enthaltendes Produkt wird von H. Mykola et al in Am. J. Med. Sci. 207, 209—19, 1944 (vergl. Chemical Abstracts, Bd. 38, Nr. 7, 10. April 1944, Spalte 1770/7) beschrieben.

In der DE-OS 2 705 433 wird in Beispiel 7 ein Produkt beschrieben, welches Honig und Vitamine enthält. In der SR-PS 2 463 587 wird ein Verfahren zur Behandlung von Honig beschrieben, bei dem auch dem Honig das Wasser durch Lyophilisierung abgetrennt wird.

In der EP-A1-0 055 381 wird ein Verfahren zur Herstellung eines ein Bienenprodukt enthaltenden Konzentrats beschrieben, bei dem man Bienenpollen, Bienenbrot, Propolis, Honig, Wachs oder ihre Gemische zu Konzentrationen aus Vollmilch, Magermilch oder anderen Eiweißträgern gibt, zu dem Gemisch Kohlehydrate zufügt und das erhaltene Gemisch bei einer Temperatur von 15 bis 75°C rührt und anschließend trocknet. Dieses bekannte Produkt enthält 10 bis 40 Gew.-% Trockenmasse, die aus Bienenprodukten stammt. Es ist ein Pulver.

In der US-PS 2 947 636 wird ein Verfahren zur Herstellung eines trockenen festen Produktes beschrieben, welches zur Herstellung von Nahrungsmitteln verwendet werden kann und das aus einem Stärkehydrolysat und einem proteinhaltigen Material besteht. Als Protein wird Gelatine, Casein, Glycinin oder ein anderes Sojaprotein, Albumin etc. verwendet.

Alle diese bekannten Produkte besitzen den Nachteil, daß sie entweder nur auf komplizierte Wege hergestellt werden können oder daß sie verderblich sind oder daß das Verhältnis von Eiweiß : Fett : Kohlenhydrate nicht innerhalb des geeigneten Verhältnisses liegt.

Der vorliegenden Erfindung liegt somit die Aufgabe zugrunde, ein Nahrungskonzentrat zur Verfügung zu stellen, welches naturbelassen ist und welches das geeignete Verhältnis von Eiweiß : Fett : Kohlenhydrate aufweist, so daß es entweder zur Alleinversorgung oder als Ausgleichsnahrungsmittel verwendet werden kann. Das erfindungsgemäße Nahrungskonzentrat soll weiterhin die für eine optimale Ernährung erforderlichen Zusatzstoffe, wie Vitamine, Mineralien und Spurenelemente, ausgerichtet auf die speziellen Belange der Versorgung und des Ausgleichs, enthalten. Das Verfahren zur Herstellung des erfindungsgemäßen Nahrungskonzentrats soll auf einfache Weise durchzuführen sein, und die zur Herstellung erforderlichen Apparate und Geräte sollen leicht verfügbar sein.

Das erfindungsgemäße Nahrungskonzentrat soll für den direkten Verzehr als Bestandteil und Ergänzung zur täglichen Nahrung oder für spezielle Zwecke, etwa im Sport, im Alter und in der Jugend oder bei Schwangerschaft und bei besonderen Diätvorschriften, geeignet sein. Es soll insbesondere lange Zeit haltbar sein, ohne daß sich die empfindlichen Bestandteile, wie Eiweiß und pflanzliche Fette, zersetzen. Es soll weiterhin nicht durch Konservierungsmittel haltbar gemacht werden und in naturbelassener Form vorliegen. Außerdem soll es für den leichten Gebrauch pastös sein, damit eine Verabreichung auch bei schwierigeren Bedingungen (Krankheit oder kein Wasser zum Anrühren verfügbar) gewährleistet ist.

Die Erfindung betrifft ein Verfahren zur Herstellung eines lagerstabilen, homogenen, plastischen, biologisch hochwertigen, naturbelassenen Nahrungskonzentrats durch Vermischen von Honig oder Honig vermischt mit anderen Bienenprodukten, einem Eiweißträger und gegebenenfalls Kohlehydraten, das dadurch gekennzeichnet ist, daß man mindestens 40 Gew.-% Honig oder Honig vermischt mit anderen Bienenprodukten, 5 bis 25 Gew.-% Mineralstoffe, 5 bis 25 Gew.-% Eiweißträger mit einer biologischen Wertigkeit über 90 und einem Gesamtanteil an essentiellen Aminosäuren von mindestens 50 Gew.-% als hochwertiges Eiweißprodukt oder ein Gemisch aus hochwertigen Eiweißprodukten, 0 bis 35 Gew.-% Ballaststoffe und/oder Kohlehydrate, bezogen auf das Endprodukt, miteinander vermischt, wobei man den Honig vorgibt, zu dem Honig unter Rühren die Mineralstoffe zufügt und dann zu dem Gemisch aus Honig und Mineralstoffen unter Rühren das Eiweißprodukt zugibt und danach gegebenenfalls die Ballaststoffe zufügt.

Die Erfindung betrifft weiterhin ein Verfahren zur Herstellung eines lagerstabilen, homogenen, plastischen, biologisch hochwertigen, naturbelassenen Nahrungskonzentrats, durch Vermischen von Honig oder Honig vermischt mit anderen Bienenprodukten, einem Eiweißträger und gegebenenfalls Kohlehydraten, dadurch gekennzeichnet, daß man mindestens 40 Gew.-% Honig oder Honig vermischt mit anderen Bienenprodukten, 1 bis 25 Gew.-% pflanzliches Öl mit einem Schmelzpunkt unter 15°C und einem Anteil an essentiellen Fettsäuren über 50 Gew.-% oder ein Gemisch aus pflanzlichen Ölen, 5 bis 30 Gew.-% Eiweißträger mit einer biologischen Wertigkeit über 90 und einem Gesamtanteil an essentiellen Aminosäuren von mindestens 50 Gew.-% als hochwertiges Eiweißprodukt oder ein Gemisch aus hochwertigen Eiweißprodukten und 0 bis 10 Gew.-% Mineralzusätze miteinander vermischt, wobei man den Honig vorgibt, zu dem Honig unter Rühren das pflanzliche Öl oder ein Gemisch aus pflanzlichen Ölen zugibt und dann zu dem erhaltenen Gemisch aus Honig und Fettprodukten unter Rühren gegebenenfalls die Mineralzusätze zufügt und dann das Eiweißprodukt oder ein Gemisch aus Eiweißprodukt zugibt und rührt.

Überraschenderweise zeigt es sich, daß die erfindungsgemäß hergestellten Nahrungskonzentrate alle oben erwähnten Forderungen erfüllen und insbesondere sehr lagerungsfähig sind. Honig wirkt als Konservierungsmittel, indem er einerseits bakteriostatisch wirkt und andererseits verhindert, daß Luft Zugang zu den leicht verderblichen Produkten, wie Pflanzenfett und Eiweiß, hat. Das erfindungsgemäße Endprodukt ist zähflüssig pastös, so daß es in Tuben abgepackt und in Tuben vermarktet werden kann. Die viskose Konsistenz des Honigs ist für das Fließverhalten des Produktes charakteristisch. Der Honig erfüllt überraschenderweise zwei technische Aufgaben, indem er einerseits für den Luftabschluß der Mischung sorgt und andererseits für die Bakteriostase und Konservierung maßgebend ist. Da die Komponenten, gegebenenfalls unter Zusatz von Wasser, in den Honig hineingearbeitet werden und in ihm feinst verteilt (gelöst, suspendiert, dispergiert, gegebenenfalls emulgiert) also homogen vorliegen, ist es möglich, ohne übliche technische Maßnahmen, wie Erhitzung, Pasteurisierung, chemische Konservierungsmittel usw., ein lange haltbares, stabiles Produkt herzustellen, das durch den Honig geschmacklich bestimmt wird. Auf solche Weise ist es möglich, nicht nur die chemisch faßbaren Nährbausteine in das Konzentrat zu überführen, sondern auch die gegen Chemikalien, Hitze, Luft und Sauerstoff empfindlichen Vitalstoffanteile unversehrt und lange wirksam zu erhalten.

Es war auch überraschend, daß das erfindungsgemäße Produkt seine Konstitution beibehält. Vermischt man Honig mit Eiweiß oder vermischt man Honig mit Fett, insbesondere flüssigem Pflanzenfett, wie Sonnenblumenöl, so erhält man ein Gemisch, welches sich beim Lagern in zwei Phasen trennt. Das erfindungsgemäße Produkt ist stabil, und es findet keine Phasentrennung statt.

Bei dem erfindungsgemäßen Verfahren kann man jegliche Arten von Honigsorten verwenden. Der bei dem erfindungsgemäßen Verfahren verwendete Honig kann zusätzlich noch andere Bienenprodukte enthalten. Honig kann beispielsweise Bienenbrot und/oder Blütenpollen, Weisellarvensaft (Gelee royale), Drohnenlarvensaft, dispergiertes Bienenwachs, Propolisextrakt und/oder Propolis enthalten. Der Honig enthält jedoch insgesamt nicht mehr als 50 Gew.-% anderes Bienenprodukt, vorzugsweise 40 Gew.-%, besonders bevorzugt 15 Gew.-% anderes Bienenprodukt oder Gemisch aus Bienenprodukten, bezogen auf den Honig. Die Anteile der verschiedenen Bienenprodukte können wie folgt sein:

Bienenbrot und/oder Blütenpollen bis zu 50 Gew.-%,
vorzugsweise 20 bis 30 Gew.-%,
Weisellarvensaft (Gelee royale) und/oder Drohnenlarvensaft bis zu 15 Gew.-%,
vorzugsweise 5 bis 10 Gew.-%,
dispergiertes Bienenwachs und/oder Propolisextrakt bis zu 10 Gew.-%,
vorzugsweise 2 bis 8 Gew.-% und
Propolis (Bienenkittharz) bis zu 2 Gew.-%,
vorzugsweise 1 Gew.-%.

Erfindungsgemäß wird ein hochwertiges Eiweißprodukt oder ein Gemisch aus hochwertigen Eiweißprodukten verwendet. Der Ausdruck hochwertiges Eiweißprodukt soll in der vorliegenden Beschreibung auch ein Gemisch aus hochwertigen Eiweißprodukten mitumfassen. Das Eiweißprodukt ist ein Eiweißträger, der hochmolekular ist, eine biologische Aktivität aufweist und empfindlich ist. Die biologische Wertigkeit liegt bei mindestens 90, und der Anteil an essentiellen Aminosäuren in $N = 16$ (100 g Eiweiß = 100) liegt über 50%. Solche Eiweißprodukte sind gegen Verderb hochempfindlich, anfällig gegen Erhitzung, gegen Pasteurisierung und gegen langes Stehenlassen. Bis jetzt gibt es praktisch noch keine Möglichkeit, solche Eiweißprodukte in naturbelassenem Zustand in Nahrungsmittel zu überführen. Beispiele für Eiweißprodukte sind Milch-Albumine und Milch-Globuline, das Retentat aus Ultrafiltration von Milch, welches möglichst kaseinarm sein sollte, bevorzugt »Molken-Eiweiß ohne NPN-Fraktion«, Blutserum-Albumine und Blutserum-Globuline aus frischen Schlachtkörpern, Hühnereiweiß, frisches Vollei, gefriergetrocknetes oder sprühgetrocknetes Ovoalbumin, Ovoglobulin und Ovovitellin, extrahierte Hefen aus Zuchthefen von Saccharomyces, Candida, Torula, ferner Methylophilusarten, gegebenenfalls als Hydrolysate, Fleischsaft, Fischsaft, eingedickt. Alle diese Eiweißprodukte werden in solcher Form verwendet, daß sie den aufgeführten Merkmalen entsprechen. Diese Eiweiße sind, wie oben angegeben, hochempfindlich, verderben schnell und werden überraschenderweise durch den Honig konserviert und in haltbaren Zustand überführt. Sie werden vom Körper praktisch schlackenlos verwertet.

Als Mineralstoffe verwendet man bei dem erfindungsgemäßen Verfahren solche, wie sie allgemein üblich sind. Allgemein liegen die Mineralstoffe in Form von Mischungen aus mineralischen Einzelbestandteilen vor. Beispiele von Mineralstoffen sind Calcium-, Natrium-, Magnesiumverbindungen, insbesondere die Phosphate und Spurenelementverbindungen. Als Mineralzusätze kann man weiterhin z. B. Kaliumacetat, Pflanzenasche und andere Elektrolyten verwenden. Es ist von besonderem Interesse, daß der Mineralzusatz Kalium, Calcium, Magnesium, Phosphor, Schwefel und Chlorid enthält, gegebenenfalls auch Natrium. Die Spurenelemente liegen im allgemeinen in Form der Oxide, Carbonate, Chloride, Sulfate, Acetate, Lactate oder Fumarate vor und Spurenelemente sind beispielsweise Eisen, Jod, Calcium, Kalium, Natrium, Kobalt, Kupfer, Mangan, Molybdän, Selen und Zink. Die Mineralien sind dem Fachmann geläufig und solche Vormischungen sind im Handel erhältlich.

Erfindungsgemäß verwendet man als Ballaststoffe und/oder Kohlenhydrate im allgemeinen polymere Kohlenhydrate.

Als polymere Kohlenhydrate werden Kohlenhydrate verwendet, die entweder als Ballaststoffe wirken oder selbst Nährmittelqualität aufweisen. Vorzugsweise verwendet man Cellulosen. Von den Cellulosen ist die Alpha-Cellulose besonders bevorzugt, da sie industriell verfügbar ist. Sonst bevorzugte Kohlenhydrate sind extrudierte oder expandierte Getreideprodukte oder mikronisierte Getreideprodukte, die im Handel erhältlich sind, beispielsweise Quellmehle, extrudierte Stärkevorprodukte für die Lebensmittelindustrie, z. B. solche aus Weizen, Mais, Reis, Hirse und Maltodextrine. Derartige polymere Kohlenhydrate sind dem Fachmann geläufig.

Erfindungsgemäß verwendet man weiterhin als pflanzliches Öl, wobei der Ausdruck »pflanzliches Öl« auch Gemische mitumfassen soll, vorzugsweise Sonnenblumenöl, Leinöl und Distelöl (Saffloröl). Diese Öle weisen einen hohen Gehalt an lebenswichtigen Fettsäuren auf und verhindern, daß sich Fettverbindungen, z. B. Cholesterin, in den Gefäßen ablagert.

Der Schmelzpunkt dieser Öle liegt unter 15°C, vorzugsweise unter 20°C, und der Anteil der essentiellen Fettsäuren ist über 50, besonders bevorzugt über 60 Gew.-%.

Die verwendeten Öle werden grundsätzlich als Flüssigkeit eingesetzt. Im allgemeinen verwendet man Pflanzenöle, die mit Lecithin emulgiert und stabilisiert sind (Tocopherole = Vitamine E mit Synergisten = Ascorbinsäure, Zitronensäure usw.). (vgl. zur Literatur der Fette »Industrial Oil and Fat Products, A. E. Bailey, 1951, Interscience Publ. Inc. New York, USA, »The Chemical Constitution of Natural Fats«, T. P. Hilditch, 1956, 3. revidierte Auflage, X. Chapman & Hall Ltd., London, Großbritannien, »Analyse der Fette und Fettprodukte«, H. P. Kaufmann, Bd. I und II, 1958, 1. Auflage, Springer-Verlag, Berlin.)

Die erfindungsgemäß hergestellten Nahrungskonzentrate können zusätzlich noch andere Zusatzstoffe, wie sie üblicherweise in derartigen Nahrungskonzentraten verwendet werden, enthalten. Beispiele für solche anderen Zusatzstoffe sind Enzyme, Hormone, Vitamine, Mineralstoffe, Spurenelemente, Farbstoffe, Aromastoffe, Pflanzenkonzentrate mit pharmakologischer Wirkung, Stoffe zur Vorbeugung verbreitet auftretender Krankheiten und ihre Gemische. Das erfindungsgemäße Produkt, welches Honig oder Honig, vermischt mit anderen Bienenprodukten, ein hochwertiges Eiweißprodukt oder ein Gemisch aus hochwertigen Eiweißprodukten, Mineralstoffe und gegebenenfalls Ballaststoffe und/oder Kohlenhydrate enthält, enthält diese Bestandteile in den in der folgenden Tabelle I aufgeführten Verhältnissen.

Tabelle I

Gewichtsprozent der verschiedenen Bestandteile (bezogen auf 100 Gew.-% Endprodukt [Nahrungskonzentrat])

|  | allgemein | bevorzugt | besonders bevorzugt |
|---|---|---|---|
| Honig oder Honig vermischt mit anderen Bienenprodukten | mindestens 40 | 45 −85 | 50 −70 |
| Eiweißprodukt | 5−25 | 5 −20 | 5 −15 |
| Mineralzusatz | 5−25 | 5 −20 | 10 −20 |
| Ballaststoffe | 0−35 | 5 −25 | 5 −15 |
| außerdem andere Zusatzstoffe (bezogen auf das Gemisch aus Nahrungskonzentrat und Zusatzstoff) | 0− 5 | 0,5− 3 | 2,5− 3 |

Das erfindungsgemäße Nahrungsmittelkonzentrat, welches Honig, Eiweißprodukt, pflanzliches Fettprodukt und Mineralzusätze enthält, enthält diese Bestandteile in den in der folgenden Tabelle II angegebenen Mengen.

Tabelle II

Gewichtsprozent der verschiedenen Bestandteile (bezogen auf 100 Gew.-% Endprodukt [Nahrungskonzentrat])

|  | allgemein | bevorzugt | besonders bevorzugt |
|---|---|---|---|
| Honig oder Honigmischung | mindestens 40 | 45−85 | 50 −70 |
| Eiweißträger, gerechnet als Roheiweißgehalt im Endprodukt | 5−30 | 10−30 | 10 −25 |
| Pflanzliche Öle | 1−25 | 2−20 | 5 −15 |
| Mineralzusätze | 0−10 | 1− 8 | 1 − 5 |
| außerdem andere Zusatzstoffe (bezogen auf das Gemisch aus Nahrungskonzentrat und Zusatzstoff) | 0− 5 | 1− 3 | 2,5− 3 |

Die erfindungsgemäß hergestellten Nahrungskonzentrate können, wie oben ausgeführt, weitere Zusatzstoffe enthalten. Diese Zusatzstoffe können in einer Menge bis zu 5 Gew.-%, bezogen auf das Gemisch aus Nahrungskonzentrat und Zusatzstoffen, vorhanden sein. In anderen Worten bedeutet dies, daß man 95 Gew.-% des erhaltenen Nahrungskonzentrats und 5 Gew.-% Zusatzstoffe miteinander vermischt. Das Zumischen der Zusatzstoffe kann zu irgendeinem beliebigen Zeitpunkt bei der Herstellung der Produkte erfolgen.

**0 087 669**

Die Herstellung der erfindungsgemäßen Produkte erfolgt auf einfache Weise. Man verwendet beliebige Mischer und Rühreinrichtungen, in die man den Honig vorgibt, und mit denen der Honig gerührt bzw. ausreichend bewegt werden kann. Solche Mischeinrichtungen sind dem Fachmann geläufig und werden beispielsweise auch in der EP-A-0 085 865 beschrieben. In die Mischeinrichtung wird der Honig vorgegeben. Zu dem Honig gibt man gemäß der ersten Verfahrensvariante den Mineralstoff hinzu und vermischt. Zu dem Gemisch aus Honig oder Honig, vermischt mit anderen Produkten und Mineralstoffen fügt man dann das hochwertige Eiweißprodukt oder ein Gemisch aus hochwertigen Eiweißprodukten hinzu und rührt weiter. Das Mischen ist im allgemeinen in allerkürzester Zeit, beispielsweise während einer Zeit von 3 bis 5 Minuten, beendigt. Zu dem erhaltenen Gemisch kann man dann gegebenenfalls noch die Ballaststoffe zufügen, wobei man nochmals wenige Minuten weitermischt.

Bei der anderen Verfahrensvariante wird zu dem vorgegebenen Honig oder Honig, vermischt mit anderen Bienenprodukten, das pflanzliche flüssige Fettprodukt oder ein Gemisch aus pflanzlichen flüssigen Fettprodukten unter Rühren gegeben. Dann gibt man gegebenenfalls die Mineralzusätze hinzu. Zu diesem erhaltenen Gemisch wird dann das hochwertige Eiweißprodukt zugegeben. Man rührt kurze Zeit, auch hier ist der Mischvorgang innerhalb von 3 bis 5 Minuten beendigt. Gelegentlich kann es erforderlich sein, längere Zeit zu rühren.

Die oben erwähnten Zusatzstoffe kann man, wie angegeben, zu jedem beliebigen Zeitpunkt bei der Herstellung des Produktes zufügen.

Erfindungsgemäß lassen sich so Nahrungskonzentrate herstellen, die ein Verhältnis von Eiweiß : Fett : Kohlenhydraten aufweisen, wie sie in der folgenden Tabelle III aufgeführt sind.

Tabelle III

Aufteilung nach dem Energiegehalt

| Typ | Kohlenhydrate | Fett | Rohprotein | $\Sigma$ |
|-----|---------------|------|------------|----------|
| A | 4 | 1 | 1 | 6 |
| B | 5 | 1 | 1 | 7 |
| C | 5 | 1 | 2 | 8 |
| D | 5 | 2 | 1 | 8 |

Umrechnung der Energieanteile nach %

| | Kohlenhydrate | Fett | Rohprotein | $\Sigma$ |
|-----|---------------|------|------------|----------|
| A | 67,2 | 16,7 | 16,7 | 100 |
| B | 71,4 | 14,3 | 14,3 | 100 |
| C | 62,5 | 12,5 | 25,0 | 100 |
| D | 62,5 | 25,0 | 12,5 | 100 |

Umrechnung der Energieprozente in Massenanteile

| | Kohlenhydrate | Fett | Rohprotein | $\Sigma$ |
|-----|---------------|------|------------|----------|
| A | 16,4 | 1,8 | 4,1 | 22,3 |
| B | 17,4 | 1,5 | 3,5 | 22,4 |
| C | 15,2 | 1,3 | 6,1 | 22,6 |
| D | 15,2 | 2,5 | 3,0 | 20,7 |

Umrechnung der Massenanteile nach %

| | Kohlenhydrate | Fett | Rohprotein | $\Sigma$ |
|-----|---------------|------|------------|----------|
| A | 73,5 | 8,1 | 18,4 | 100 |
| B | 77,7 | 6,7 | 15,6 | 100 |
| C | 67,3 | 5,7 | 27,0 | 100 |
| D | 73,4 | 12,0 | 14,6 | 100 |

8

Fortsetzung

Aufteilung nach dem Energiegehalt

| Typ | Kohlenhydrate | Fett | Rohprotein | $\Sigma$ |
|---|---|---|---|---|
| min. | 65 | 5 | 10 | 80 |
| max. | 80 | 15 | 30 | 125 |

Das Nahrungskonzentrat A ist als Energiezufuhr bei Dauerbelastung, das Nahrungskonzentrat B als Kraftnahrungskonzentrat nach Dauerbelastung, das Nahrungskonzentrat C zum Aufbau von Reserven und das Nahrungskonzentrat D zum Body Building geeignet.

In Übereinstimmung mit der praktischen Erfahrung, daß Honig ab 17% Wassergehalt bereits das Risiko des Verderbs durch Gärung einbringt, vor allem bei falscher Handhabung, und daß schon die gesetzlichen Vorschriften eine deutliche Grenze bei 21% Wassergehalt setzen, war nicht zu erwarten, daß eine weitere Verdünnung des Honigs mit weiteren und aufgrund ihres hohen Nährwertes bakteriologisch riskanten Substanzen ungefährlich bleiben könne.

Es hat sich überraschend gezeigt, daß die verfahrensgemäße feinste Einmischung und meist mögliche Vermeidung von Lufteinschlüssen durch den Verfahrensgang zur völligen Stabilisierung und Konservierung führen kann. Die einleitenden Versuche, die getrennt mit Eiweiß- oder Fettträgern erfolgten, zeigten volle Haltbarkeit, jedoch eine langsam voranschreitende Entmischung. Die Versuche bestätigen die Analogie auch bei Mineral- und Spurenstoffen.

Weitere Versuche, die in Kombination von Eiweiß- und Fettträgern mit Honig erfolgten, zeigten das überraschende Ergebnis, daß Entmischungsprozesse nicht mehr eintreten, wenn alle drei Nahrungselemente Fett, Eiweiß und Kohlenhydrate im Honig vergesellschaftet und feinst verteilt enthalten sind. Überraschend war auch, daß das so gesteigerte Risiko der Haltbarkeit aus allen Mikroorganismen und spezielle Mikroorganismenarten fördernden Stoffen weiterhin absolut unter Kontrolle gehalten werden konnte.

Auch die weitere Erhöhung des Risikos durch die Aufstockung der Nahrungsgrundration mit Anteilen durch die Hinzufügung von Vitaminen, in Wasser gelösten Mineralstoffen und Spurenstoffen, erwies sich als absolut kontrollierbar.

Der außerordentliche Vorteil, der sich aus den umfangreichen Versuchs- und Vorarbeiten herausstellte, war der, daß damit ein Verfahren zur Herstellung derartiger biologisch wichtiger Konzentrate gefunden war, daß auf die üblichen Methoden der Haltbarmachung durch Trocknung mittels Erhitzen, durch Konservierung mit Hilfe von Chemikalien verzichtet werden kann.

Infolgedessen steht im Verfahren ein Mittel zur Verfügung, das es gestattet,

1.  in beliebiger Weise Kohlenhydrate, im wesentlichen als Honig, mit Eiweißträgern, Fettträgern, Vitaminen und Mineralien und Spurenstoffen so zu koppeln, daß damit bedarfsgerechte Voll- und Ergänzungsrationen konzipiert werden können;
2.  auf alle Arten mehr oder weniger unnatürlicher oder denaturierender Konservierungsverfahren zu verzichten, um damit die den Rationsbestandteilen innewohnenden natürlichen Eigenschaften unberührt und unbeeinträchtigt zu erhalten; und
3.  solche Stoffgemenge so zu konzentrieren und über lange Zeit zu konservieren, daß in geringem Raum und bei geringem Gewicht, bezogen auf den Inhalt, quantitativ und qualitativ der Höchstwert unbeschadet bis zum Verzehr erhalten bleibt. Das erfindungsgemäße Produkt reicht als einziges Nahrungsprodukt aus und ermöglicht Hochleistungen ohne Verlust.

Die folgenden Beispiele erläutern die Erfindung.

## Beispiel 1

### 1. Vorbereitende Arbeiten

1.1 Herstellung der Mineralmischung

| | |
|---|---|
| Kaliumacetat | 4,0 kg |
| Calciumphosphat | 6,8 kg |
| Magnesiumphosphat | 8,4 kg |
| Pflanzenasche | 0,8 kg |
| Orangensaft | 10,0 kg = 30,0 kg Dispersion |

1.2 Herstellung des Aromagemisches natürlicher Aromaextrakte

| | |
|---|---|
| Honig | 0,1 kg |
| Vanille | 0,1 kg |
| Orange | 0,1 kg |
| Sahne | 0,06 kg = 0,36 kg Essenz |

## 2. Herstellung des Endprodukts

Mischgerät, gereinigt, desinfiziert;

| | | | |
|---|---|---|---|
| 2.1 | Pollen-Honig (25 : 75) zugeben | 20,0 kg | |
| 2.2 | Zusatz der Aromen (1.2) | 0,36 kg | kurz mischen (10 s) |
| 2.3 | Blütenhonig zugeben | 40,0 kg | kurz mischen (3—5 s) |
| 2.4 | Zusatz der Mineraldispersion | 30,0 kg | kurz mischen (2 × 15 s) |
| 2.5 | Vitaminvormischung zugeben | 0,1 kg | kurz mischen (3—5 s) |
| 2.6 | Fructoselösung 70/92 zugeben | 10,0 kg | kurz mischen (15 s) |
| 2.7 | Milcheiweiß zugeben | 4,0 kg | kurz mischen (15 s) |
| 2.8 | Ballaststoffe (Alpha-Cellulose) dazu | 4,0 kg | mischen (2 × 3 s) |
| | | 108,46 kg | Endprodukt |

entnehmen und in Tuben abfüllen. (Temperatur bei Arbeitsende 30 bis 32°C.)

## Beispiel 2

### 1. Vorbereitungen

1.1 Herstellung der Mineralmischung mit Vitaminen

| | |
|---|---|
| Kaliumacetat | 310 g |
| Calciumhydrogenphosphat | 430 g |
| Magnesiumhydrogenphosphat | 310 g |
| Vitaminmischung | 80 g = 1130 g |
| mit Wasser dispergieren zu | 6000 g |

1.2 Herstellung der Fettmischung mit Provitamin A (Beta-Carotin)

| | |
|---|---|
| Sonnenblumenöl | 5400 g |
| Lecithin | 500 g |
| Beta-Carotinsuspension | 100 g = 6000 g |

### 2. Herstellung des Endprodukts

Mischgerät, gereinigt, desinfiziert

| | | | |
|---|---|---|---|
| 2.1 | Pollenhonig (25 : 75) | 20,0 kg | |
| 2.2 | Blütenhonig | 46,0 kg | |
| 2.3 | Zugabe der Mineralmischung (1.1) | 6,0 kg | kurz mischen (2 × 10 s) |
| 2.4 | Zugabe der Fettmischung (1.2) | 6,0 kg | kurz mischen (2 × 15 s) |
| 2.5 | Zugabe von Lactalbumin aus Ultra-filtration (pH 5,5—5,6) | 22,0 kg | kurz mischen (2 × 30 s) |
| | | 100,0 kg | |

entnehmen und die cremige Masse in Gebinde oder Tuben abfüllen (Temperatur 30 bis 32°C)

Inhaltsstoffe:

| | | |
|---|---|---|
| | 61% | Blütenhonig |
| | 22% | Milcheiweißträger |
| | 6% | Öl, Sonnenblume + Lecithin + Carotin |
| | 5% | Blütenpollen |
| ca. | 1% | Mineralzusatz |
| ca. | 5% | Wasserzusatz (Einstellung der Konsistenz) |

10

**0 087 669**

In den folgenden Tabellen IV und V sind Übersichten über Versuchsrezepturen aufgeführt.

Tabelle IV

| Inhaltsstoffe | Versuch Nr. | | | |
|---|---|---|---|---|
| | 1 | 2 | 3 | 4 |
| | alle Angaben in % des Endprodukts | | | |
| Honig (Blüten-, Wald-) | 56,7 | 56,0 | 44,1 | 70,0 |
| Honig und Pollen 75 : 25 | — | — | 14,7 | 10,0 |
| darin Pollenanteil () | — | — | (3,7) | (2,5) |
| Molken-Konzentrat/Milch-Konzentrat, eiweißreich, lactosearm | | | | |
| pulverisiert | — | — | 14,7 | 10,0 |
| eingedickt (49%TS) | 18,9 | 18,9 | — | — |
| Mineralzusätze | 13,3 | 14,0 | 13,9 | 10,0 |
| Kaliumacetat | (6,3) | (6,3) | (7,3) | (4,0) |
| Di-Calcium-Phosphat | (3,7) | (3,7) | (3,7) | (3,5) |
| Magnesium-Phosphat | (3,7) | (3,3) | (2,9) | (2,5) |
| Pflanzen-Asche | — | (0,7) | 0,7 | Spuren |
| Aromen | + | + | + | + in mg-Bereich |
| Ballast und Kohlenhydrate (Alpha-Cellulose) | 11,0 | 11,0 | 9,6 | — |
| () nicht berechnet Anteile in Stoffgruppe hier exakt aufgeteilt | 100 | 100 | 100 | 100 |
| Inhaltsstoffe im Endprodukt chemisch | | | | |
| Trockenmasse | 77,8 | 77,8 | 80,1 | 82,2 |
| Wassergehalt (Honig/Zusatz) | 22,2 | 22,2 | 19,9 | 17,8 |
| Rohprotein (Roheiweiß) | 4,2 | 4,2 | 3,3 | 2,2 |
| Rohfett | + | + | + | + nur Spuren |
| Kohlenhydrate Zucker | 44,1 | 43,4 | 46,7 | 67,5 |
| Kohlenhydrate Ballast | 11,0 | 11,0 | 9,6 | — |
| Roh-Asche = Minerale | 18,5 | 19,2 | 20,5 | 12,5 |

Tabelle V

| Inhaltsstoffe | Produkte | | | | |
|---|---|---|---|---|---|
| | A | B | C | D | E |
| Honig | 65,5 | 44,4 | 59,5 | 72 | 67,1 |
| Honig und Pollen | — | 14,8 | — | — | — |
| darin Pollenanteil () | — | (3,7) | — | — | — |
| Eiweißträger Retentat aus UF | 19,2 | 20,6 | 21,0 | 16,9 | 19,9 |
| Vollei frisch | 8,5 | — | — | — | — |
| Fett-Träger Sonnenblumenöl | 4,9 | 13,9 | 13,0 | 11,0 | 10,4 |
| Lecithin | 0,2 | 1,2 | 0,8 | — | 2,6 |
| Mineral (Elektrolyte: K—Ca—Mg—(Na)—P—S—Cl) | | | | | |
| Zusatz gesamt | 1,2 | 1,1 | 1,1 | — | — |
| Aromen/Vitamine | + | + | + | + | + (Spuren, mg-Bereich) |
| Wasser (Viskosität einstellen) | 1,5 | 4,0 | 4,5 | — | 4,8 |
| | 100 | 100 | 100 | 100 | 100 |

Das erfindungsgemäße biologisch hochwertige, naturbelassene Nahrungskonzentrat kann als Nahrungsmittel, Vorprodukt für die Nahrungsmittelherstellung und als Trägerstoff für Arzneimittel Verwendung finden. Es ist beispielsweise weiterhin für alte und kranke Menschen geeignet, die nur wenig zu sich nehmen können. Beim Sport findet es vielfache Verwendung, beispielsweise beim Trecking, beim Bergsteigen, als Kraftsporthochleistungskonzentrat. Das erfindungsgemäße Nahrungskonzentrat kann abgepackt werden und aus den Tuben je nach Bedarf entnommen werden. Man kann es weiterhin in zerkaubare Ampullen, Dosen etc. einfüllen. Es ist als Brotaufstrich geeignet, und da es wasserlöslich ist, kann es auch jederzeit mit Wasser verdünnt und als Getränk konsumiert werden.

**Patentansprüche**

1. Verfahren zur Herstellung eines lagerstabilen, homogenen, plastischen, biologisch hochwertigen, naturbelassenen Nahrungskonzentrats, durch Vermischen von Honig oder Honig vermischt mit anderen Bienenprodukten, einem Eiweißträger und gegebenenfalls Kohlehydraten, dadurch gekennzeichnet, daß man

1. mindestens 40 Gew.-% Honig oder Honig vermischt mit anderen Bienenprodukten,
2. 5 bis 25 Gew.-% Mineralstoffe,
3. 5 bis 25 Gew.-% Eiweißträger mit einer biologischen Wertigkeit über 90 und einem Gesamtanteil an essentiellen Aminosäuren von mindestens 50 Gew.-% als hochwertiges Eiweißprodukt oder ein Gemisch aus hochwertigen Eiweißprodukten,
4. 0 bis 35 Gew.-% Ballaststoffe und/oder Kohlehydrate, bezogen auf das Endprodukt,

miteinander vermischt, wobei man den Honig vorgibt, zu dem Honig unter Rühren die Mineralstoffe zufügt und dann zu dem Gemisch aus Honig und Mineralstoffen unter Rühren das Eiweißprodukt zugibt und danach gegebenenfalls die Ballaststoffe zufügt.

2. Verfahren zur Herstellung eines lagerstabilen, homogenen, plastischen, biologisch hochwertigen, naturbelassenen Nahrungskonzentrats, durch Vermischen von Honig oder Honig vermischt mit anderen Bienenprodukten, einem Eiweißträger und gegebenenfalls Kohlehydraten, dadurch gekennzeichnet, daß man

1. mindestens 40 Gew.-% Honig oder Honig vermischt mit anderen Bienenprodukten,
2. 1 bis 25 Gew.-% pflanzliches Öl mit einem Schmelzpunkt unter 15°C und einem Anteil an essentiellen Fettsäuren über 50 Gew.-% oder ein Gemisch aus pflanzlichen Ölen,
3. 5 bis 30 Gew.-% Eiweißträger mit einer biologischen Wertigkeit über 90 und einem Gesamtanteil an essentiellen Aminosäuren von mindestens 50 Gew.-% als hochwertiges Eiweißprodukt oder ein Gemisch aus hochwertigen Eiweißprodukten und
4. 0 bis 10 Gew.-% Mineralzusätze

miteinander vermischt, wobei man den Honig vorgibt, zu dem Honig unter Rühren das pflanzliche Öl oder ein Gemisch aus pflanzlichen Ölen zugibt und dann zu dem erhaltenen Gemisch aus Honig und Fettprodukten unter Rühren gegebenenfalls die Mineralzusätze zufügt und dann das Eiweißprodukt oder ein Gemisch aus Eiweißprodukt zugibt und rührt.

3. Verfahren nach Anspruch 1 oder 2, dadurch gekennzeichnet, daß man als andere Bienenprodukte Drohnensaft, Weiselsaft, Propolis, Propolisextrakte, Pollen, Bienenbrot und/oder ihre Gemische verwendet.

4. Verfahren nach einem der Ansprüche 1, 2 oder 3, dadurch gekennzeichnet, daß man als Gemisch aus Honig und Bienenprodukt Honig, der, bezogen auf das Honigfrischgewicht,

bis zu 50 Gew.-%  Bienenbrot und/oder Blütenpollen und/oder
bis zu 15 Gew.-%  Weisellarvensaft (Gelee Royale) und/oder Drohnenlarvensaft und/oder
bis zu 10 Gew.-%  dispergiertes Bienenwachs und/oder Propolisextrakt und/oder
bis zu  2 Gew.-%  Propolisextrakt (Bienenkittharz)

enthält, wobei der Honig insgesamt nicht mehr als 50 Gew.-% Bienenprodukt enthält, verwendet.

5. Verfahren nach einem der vorhergehenden Ansprüche, dadurch gekennzeichnet, daß man dem erhaltenen Nahrungskonzentrat bis zu 5 Gew.-% eines oder mehrerer Zusatzstoffe, bezogen auf das Gemisch aus erhaltenem Nahrungskonzentrat und Zusatzstoffen, beimischt.

6. Verfahren nach einem der vorhergehenden Ansprüche, dadurch gekennzeichnet, daß man als Zusatzstoffe Enzyme, Hormone, Vitamine, Mineralstoffe, Spurenelemente, Farbstoffe, Aromastoffe, Pflanzenkonzentrate mit pharmakologischer Wirkung und/oder ihre Gemische verwendet.

7. Biologisch hochwertiges, naturbelassenes Nahrungskonzentrat, dadurch gekennzeichnet, daß es nach einem der Ansprüche 1 bis 6 erhalten worden ist.

8. Verwendung des biologisch hochwertigen, naturbelassenen Nahrungskonzentrats nach Anspruch 7 als Nahrungsmittel, als Vorprodukt für die Nahrungsmittelherstellung oder als Trägerstoff für Arzneimittel.

## Claims

1. A process for the production of a storable, homogeneous, plastic, natural food concentrate of high biological value by mixing honey or honey mixed with other bee products, a protein carrier and, optionally, carbohydrates, characterized in that

1. at least 40% by weight of honey or honey mixed with other bee products,
2. from 5 to 25% by weight of minerals,
3. from 5 to 25% by weight of protein carriers having a biological value above 90 and a total content of essential amino acids of at least 50% by weight as high-value protein product or a mixture of high-value protein products,
4. from 0 to 35% by weight of ballast substances and/or carbohydrates, based on the end product,

are mixed together, the honey being added first, the minerals being added to the honey with stirring, the protein product being added to the mixture of honey and minerals with stirring and the ballast substances, if any, being added last.

2. A process for the production of a storable, homogeneous, plastic, natural food concentrate of high biological value by mixing honey or honey mixed with other bee products, a protein carrier and, optionally, carbohydrates, characterized in that

1. at least 40% by weight of honey or honey mixed with other bee products,
2. from 1 to 25% by weight of vegetable oil having a melting point below 15°C and a content of essential amino acids of more than 50% by weight or a mixture of vegetable oils,
3. from 5 to 30% by weight of protein carriers having a biological value above 90 and a total content of essential amino acids of at least 50% by weight as high-value protein product or a mixture of high-value protein products and

4. from 0 to 10% by weight of mineral additives are mixed together, the honey being added first, the vegetable oil or a mixture of vegetable oils being added to the honey with stirring, the mineral additives, if any, being added to the resulting mixture of honey and fatty products with stirring and the protein product or a mixture of protein products being added last with stirring.

3. A process as claimed in Claim 1 or 2, characterized in that drone juice, queen juice, propolis, propolis extracts, pollen, beebread and/or mixtures thereof are used as the other bee products.

4. A process as claimed in Claim 1, 2 or 3, characterized in that honey containing

up to 50% by weight of  beebread and/or flower pollen and/or
up to 15% by weight of  queen larvae juice (gelle royale) and/or drone larvae juice and/or
up to 10% by weight of  dispersed beeswax and/or propolis extract and/or
up to   2% by weight of  propolis extract (bee glue resin),

based on the fresh weight of the honey, the honey containing in all no more than 50% by weight of bee product, is used as the mixture of honey and bee product.

5. A process as claimed in any of the preceding Claims, characterized in that up to 5% by weight of one or more additives, based on the mixture of food concentrate and additives, is added to the food concentrate obtained.

6. A process as claimed in any of the preceding Claims, characterized in that enzymes, hormones, vitamins, minerals, trace elements, dyes, flavorings, pharmacologically active vegetable concentrates and/or mixtures thereof are used as additives.

7. A natural food concentrate of high biological value obtained by the process claimed in any of Claims 1 to 6.

8. The use of the natural food concentrate of high biological value claimed in Claim 7 as a food, as an intermediate in the production of foods or as a carrier for medicaments.

## Revendications

1. Procédé de production d'un concentré alimentaire stable au magasinage, homogène, plastique, de haute valeur biologique, ayant conservé ses qualités naturelles, par le mélange de miel, ou de miel mélangé avec d'autres produits abeillers, d'un produit contenant de l'albumine et, le cas échéant, d'hydrates de carbone, caractérisé en ce que l'on mélange ensemble

1.   au moins 40% en poids de miel ou de miel mélangé avec d'autres produits abeillers,
2.   5 à 25% en poids de matières minérales,
3.   5 à 25% en poids de corps contenant de l'albumine d'une valeur biologique supérieure à 90 et d'une valeur totale en acides aminés essentiels d'au moins 50% en poids sous la forme d'un produit albumineux de haute qualité ou d'un mélange de produits albumineux de haute qualité,
4.   0 à 35% en poids de matières inertes et/ou d'hydrates de carbone, par rapport au produit final, le miel étant introduit en premier,

les matières minérales étant ajoutées au miel sous agitation et l'albumine étant ajoutée ensuite sous agitation au mélange de miel et de matières minérales, les matières inertes étant, le cas échéant, ajoutées ensuite.

2. Procédé de production d'un concentré alimentaire stable au magasinage, homogène, plastique, de haute valeur biologique, ayant conservé ses qualités naturelles, par le mélange de miel ou de miel mélangé avec d'autres produits abeillers, d'un corps contenant de l'albumine et, le cas échéant, d'hydrates de carbone, caractérisé en ce que l'on mélange ensemble

1.   au moins 40% en poids de miel ou de miel mélangé avec d'autres produits abeillers,
2.   1 à 25% en poids d'huile végétale ayant un point de fusion inférieur à 15°C et une proportion d'acides gras essentiels supérieure à 50% en poids ou un mélange d'huiles végétales,
3.   5 à 30% en poids de corps contenant de l'albumine d'une valeur biologique supérieure à 90 et une teneur totale en acides aminés essentiels d'au moins 50% en poids sous la forme de produit albumineux de haute qualité ou d'un mélange de produits albumineux de haute qualité et
4.   0 à 10% en poids d'additifs minéraux,

le miel étant introduit en premier, l'huile végétale ou un mélange d'huiles végétales étant ajoutés au miel sous agitation et ensuite les sels minéraux étant, le cas échéant, ajoutés au mélange obtenu de miel et de matières grasses sous agitation, et ensuite le produit contenant l'albumine ou un mélange de produits albumineux étant ajoutés, le tout sous agitation.

3. Procédé suivant les revendications 1 ou 2, caractérisé en ce que l'on utilise comme autres produits abeillers du suc de faux-bourdon, du suc de reine, du propolis, des extraits de propolis, du pollen, de la sandaraque et/ou leurs mélanges.

4. Procédé suivant l'une des revendications 1, 2 ou 3, caractérisé en ce que l'on utilise comme mélange de miel et de produit abeiller du miel qui, par rapport au poids de miel frais, contient

jusqu'à 50% en poids de sandaraque et/ou de pollen floral et/ou
jusqu'à 15% en poids de suc de larves de reine (gelée royale) et/ou de suc de larves de faux-bourdon et/ou
jusqu'à 10% en poids de cire d'abeille dispersée et/ou d'extrait de propolis et/ou
jusqu'à 2% en poids d'extrait de propolis (résine de ciment abeiller),

le miel ne contenant au total pas plus que 50% en poids de produit abeiller.

5. Procédé suivant l'une des revendications précédentes, caractérisé en ce que l'on mélange au concentré alimentaire obtenu jusqu'à 5% en poids d'un ou plusieurs produits d'addition, par rapport au mélange du concentré alimentaire obtenu et des produits d'addition.

6. Procédé suivant l'une des revendications précédentes, caractérisé en ce que l'on utilise comme produits d'addition des enzymes, des hormones, des vitamines, des produits minéraux, des oligoéléments, des colorants, des arômes, des concentrés végétaux doués d'action pharmacologique et/ou leurs mélanges.

7. Concentré alimentaire de haute valeur biologique, ayant conservé ses qualités naturelles, caractérisé en ce qu'il a été obtenu suivant l'une des revendications 1 à 6.

8. Utilisation du concentré alimentaire de haute valeur biologique, ayant conservé ses qualités naturelles suivant la revendication 7 comme produit alimentaire, comme matière première pour la fabrication d'aliment ou comme support pour médicaments.